# EUROPÄISCHE PATENTSCHRIFT

(11) **EP 1 606 132 B1**
(45) Veröffentlichungstag und Bekanntmachung des Hinweises auf die Patenterteilung: **23.08.2006**
(21) Anmeldenummer: 04722812.7
(22) Anmeldetag: 24.03.2004
(51) Int. Cl.: B60K 13/04, F16F 7/08, F16F 3/02, F16L 55/035

(54) **ABGASANLAGENHALTERUNG ZUR BEFESTIGUNG DER ABGASANLAGE EINES KRAFTFAHRZEUGS**
EXHAUST-SYSTEM SUPPORT FOR FIXING THE EXHAUST SYSTEM OF A MOTOR VEHICLE
SUPPORT DE CIRCUIT D'ECHAPPEMENT SERVANT A LA FIXATION DUDIT CIRCUIT D'UN VEHICULE AUTOMOBILE

(30) Priorität: 26.03.2003 DE 10313568
(43) Veröffentlichungstag der Anmeldung: 21.12.2005
(73) Patentinhaber: ArvinMeritor Emissions Technologies GmbH, 86154 Augsburg (DE)
(72) Erfinder: STAMMEL, Reinhold, Hermann, 86150 Augsburg (DE); RUTH, Wolfgang, 86356 Neusäss (DE)
(74) Vertreter: Kitzhofer, Thomas
(86) Internationale Anmeldenummer: PCT/EP2004/003088
(87) Internationale Veröffentlichungsnummer: WO 2004/085188

(56) Entgegenhaltungen:
- DE-A- 1 555 606
- DE-A- 19 833 160
- US-A- 3 261 579
- US-A- 4 004 768

## Beschreibung

Die vorliegende Erfindung liegt auf dem Gebiet der Automobiltechnik und betrifft nach ihrer Gattung ein von einer Brennkraftmaschine angetriebenes Kraftfahrzeug mit einer Abgasanlagenhalterung zur Befestigung der Abgasanlage.

Bislang werden Abgasanlagen in Kraftfahrzeugen überwiegend mittels Gummiaufhängung am Fahrzeugunterboden befestigt. Nachteilig bei dieser Art der Befestigung ist, daß über die Gummiaufhängung im allgemeinen keine ausreichende Dämpfung erfolgt, so daß von Motor- und Getriebeverbund ausgehende Schwingungen, sowie Eigenschwingungen der Abgasanlage in den Fahrzeugunterboden geleitet werden können. Hierdurch können im Fahrzeuginnenraum von Fahrer und Mitfahrern als sehr störend empfundene Vibrationen und Brummgeräusche auftreten.

Um diese Beeinträchtigungen zu vermeiden, wurde in Betracht gezogen, die Abgasanlage zusätzlich an dem Motorgehäuse bzw. an dem Getriebegehäuse zu befestigen. Ziel dabei ist, über eine solche motor- bzw. getriebefeste Halterung die Schwingungen der Abgasanlage durch Dämpfung zu reduzieren.

Die Patentanmeldung DE 198 33 160 A offenbart ein Kraftfahrzeug mit einem Verbrennungsmotor, einem Getriebe, einer Abgasanlage und einer Abgasanlagenhalterung zur Befestigung der Abgasanlage, wobei die Abgasanlage durch die Abgasanlagenhalterung an einem Fahrzeugteil befestigt ist, wobei die Abgasanlagenhalterung ein Stützelement in Form eines Lamellenhalters ist.

Der vorliegenden Erfindung liegt die Aufgabe zugrunde, eine eine effiziente Dämpfung ermöglichende Abgasanlagenhalterung zur Verfügung zu stellen, welche zudem bei geringen Kosten praxisgerecht ist und ein geringes Gewicht aufweist.

Erfindungsgemäß wird diese Aufgabe durch die Merkmale von Anspruch 1 gelöst. Vorteilhafte Ausführungsformen der Erfindung sind in den Unteransprüchen angegeben.

Erfindungsgemäß ist eine die obigen Anforderungen erfüllende Halterung für die Abgasanlage wobei die Abgasanlage durch die Abgasanlagenhalterung an dem Motor und/oder an dem Getriebe befestigt ist, wobei die Abgasanlagenhalterung ein Stützelement in Form eines Lamellenhalters mit wenigstens zwei bandartigen, elastischen, stapelförmig übereinander liegenden und auf wenigstens einem Teil ihrer Länge gegeneinander verschiebbaren Lamellen umfaßt. Als "Lamelle" im Sinne der vorliegenden Erfindung ist ein flächiges Gebilde gemeint, dessen Abmessung in Längsrichtung wesentlich größer als dessen Abmessung in Breitenrichtung ist, während dessen Stärke wesentlich geringer als dessen Abmessung in Breitenrichtung ist.

Durch die übereinander liegenden Lamellen wird, bei einer durch eine Schwingung induzierten Auslenkung in Stapelrichtung der Lamellen, eine Dämpfung der Schwingung durch die Reibung der Oberflächen der bei einer solchen Auslenkung gegeneinander verschobenen Lamellen erzielt. Auf diese Weise werden die Schwingungen der Abgasanlage reduziert. Aufgrund seiner Bauweise kann ein solches Stützelement einerseits hart genug sein, um eine ausreichende Dämpfung von Schwingungen zu erreichen, und andererseits weich genug um die thermomechanischen Anforderungen in Bezug auf die Festigkeit zu erfüllen.

Im Vergleich zu einem massiv ausgeführten Halter gleicher Gesamthöhe kann nur ein Halter in erfingungsgemäßer Lamellenausführung die thermischen Ausdehnungen der Abgasanlage relativ zur angebundenen Struktur aufnehmen. Ein Massivhalter weist gegenüber einem erfindungsgemäßen Lamellenhalter eine höhere Steifigkeit auf und behindert die thermische Ausdehnung der Abgasanlage. Dadurch entstehen an dem Massivhalter hohe Spannungen, die dann letztendlich durch die ständige Temperaturwechselbelastung zum Bruch des Halters führen können.

Über eine Vergrößerung der Zahl der Lamellen im Stützelement kann in vorteilhafter Weise die Zahl der bei Auslenkung aneinander reibenden Oberflächen erhöht werden. Eine Vergrößerung der Zahl der angrenzenden, bei Verschiebung aneinander reibenden Oberflächen führt zu einer Erhöhung der Dämpfungswirkung, während eine Verminderung dieser Zahl zu einer Verminderung der Dämpfungswirkung führt. Gleiches gilt für eine Vergrößerung der einander anliegenden Oberflächen der Lamellen. Erfindungsgemäß sind wenigstens zwei Lamellen im Stützelement gestapelt. Vorzugsweise liegen 3 bis 5 Lamellen vor.

Das Dämpfungsverhalten des Stützelements kann in vorteilhafter Weise durch die Oberflächenbeschaffenheit der bei Auslenkung aneinander reibenden Lamellen beeinflusst werden. Eine glatte Oberfläche der Reibungsflächen führt wegen der vergleichsweise geringen Reibung zu einer entsprechend geringen Dämpfung von Schwingungen, während eine raue Oberfläche die Dämpfung von Schwingungen verstärkt. Ferner kann es günstig sein, die Reibungsflächen mit einer Struktur, beispielsweise linienförmigen Erhebungen, zu versehen, durch welche die Reibung erhöht wird. Auf diese Weise kann bei einer gegebenen Geometrie der Lamellen eines Stützelements die Reibungswirkung einander anliegender Lamellenflächen in gewünschter Weise modifiziert werden.

Durch eine Veränderung der Geometrie der Lamellen im Stützelement kann in vorteilhafter Weise die Steifigkeit des Stützelements modifiziert werden. Eine Vergrößerung der Lamellenstärke führt, bei ansonsten unveränderter Geometrie der Lamellen, zu einer Erhöhung der Steifigkeit, und umgekehrt. Ebenso kann durch eine Verminderung der Lamellenlänge, bei ansonsten unveränderter Geometrie der Lamellen, eine Erhöhung der Steifigkeit bewirkt werden, und umgekehrt. Gleiches trifft für die von den Lamellen gebildete gesamte Stärke (Höhe) des Stützelements bzw. die Länge des Stützelements zu.

Ebenso läßt sich die Steifigkeit und das Dämpfungsverhalten des Stützelementes durch die Gestaltung des Profils der Einzellamelle beeinflussen. Die kann z.B. mittels U-oder T-Profilierung oder über Versickung erfolgen. Diese Profilierung kann durchgehend oder abschnittsweise erfolgen.

Eine Veränderung der Länge des Stützelements hat darüber hinaus Einfluss auf dessen Dauerhaltbarkeit im Hinblick auf die thermischen Belastungen von der Abgasanlage. Was die thermischen Ausdehnungen angeht, so wirken sich auch diese bei einer Veränderung der Höhe des Stützelements unterschiedlich aus. Insofern sind Höhe und Länge des Stützelements auch unter diesen Aspekten geeignet zu wählen.

Durch das erfindungsgemäße Stützelement zur Befestigung der Abgasanlage an Motor und/oder Getriebe kann das Dämpfungsverhalten vorteilhaft in verschiedenen Richtungen in geeigneter Weise beeinflusst werden. Eine solche Richtungsabhängigkeit der Dämpfungswirkung kann bei einer bevorzugten Ausführungsform der Erfindung zudem durch eine geeignete Raumform des Stützelements erzielt werden. So kann das Stützelement zu diesem Zweck eine, im Längsschnitt betrachtet, gewinkelte Struktur aufweisen. Hierbei ist es insbesondere bevorzugt, wenn die winkelige Struktur eine zweifach gewinkelte Struktur in Form einer Versatzstufe ist. Als "Versatzstufe" im Sinne der vorliegenden Erfindung ist eine Struktur gemeint, bei welcher, im Längsschnitt betrachtet, ein Ende der Struktur nicht in der Verlängerung einer Tangente an dem anderen Ende der Struktur liegt.

Bei einer weiteren bevorzugten Ausführungsform zur Beeinflussung der Richtungsabhängigkeit der Dämpfungswirkung weist das Stützelement im Längsschnitt eine vierfach gewinkelte Struktur in Form zweier spiegelsymmetrisch zueinander angeordneter Versatzstufen auf. Eine solche Struktur soll insbesondere nicht versetzend sein, d. h. im Längsschnitt betrachtet liegt ein Ende der Struktur in der Verlängerung der Tangente an das andere Ende der Struktur.

Gleichermaßen kann das Stützelement eine gewundene Struktur aufweisen. Hierdurch kann die Steifigkeit bei einer der Verwindung des Stützelement entgegenwirkenden Kraft (Drehkraft) wesentlich verbessert werden.

Bei dem erfindungsgemäßen Stützelement können die Lamellen aus einem austenitischen oder ferritischen Werkstoff bestehen. Auch nichteisenmetallische Werkstoffe (z.B. Kohlefaser, Kunststoffe, Alu ...), die den Anforderungen der mechanischen und thermomechanischen Haltbarkeit entsprechen, können eingesetzt werden. Ebenso können die Lamellen aus Federstahl bestehen. Die Wahl eines geeigneten Werkstoffs hängt, bei einer gegebenen Geometrie der Lamellen bzw. des Stützelements, insbesondere von den Anforderungen bezüglich der Steifigkeit, Dämpfungswirkung und Temperaturbeständigkeit ab. Insbesondere können zu diesem Zweck die Lamellen aus dem gleichen oder aus verschiedenen Werkstoffen bestehen. Ebenso können die Lamellen verschiedene Stärken aufweisen.

Eine Befestigung der Lamellen aneinander, derart, daß sie wenigstens auf einem Teil ihrer Länge gegeneinander verschiebbar sind, erfolgt vorzugsweise durch Verschrauben, Verschweißen oder eine form- und/oder kraftschlüssige Verbindung. Im letzteren Fall ist eine besonders einfache Ausführungsform bevorzugt, bei welcher die Lamellen des Stützelements von einer im Lamellenstapel außen befindlichen Lamelle an Stirn- und/oder Längsseite umbördelt sind. Hierdurch kann in vorteilhafter Weise eine asymmetrische Steifigkeitscharakteristik erreicht werden.

Das erfindungsgemäße Stützelement kann an der Abgasanlage und/oder am Motor- bzw. Getriebegehäuse, beispielsweise durch Verschweißen, unmittelbar befestigt sein. Gleichermaßen kann das erfindungsgemäße Stützelement an der Abgasanlage mittels einer Konsole befestigt sein. Am Motor bzw. am Getriebe kann das erfindungsgemäße Stützelement mittels einer dort angebrachten motor- bzw. getriebeseitigen Halterung befestigt sein. Im letzteren Fall kann eine Befestigung des Stützelements an Konsole bzw. an der motor- bzw. getriebeseitigen Halterung durch Verschrauben erfolgen.

Zusammenfassend sei festgestellt, daß durch das erfindungsgemäße Stützelement in vorteilhafter Weise die Dämpfungseigenschaften in verschiedenen Raumrichtungen in unterschiedlicher Weise gestaltet werden können. Es kann eine Dämpfung über den zu dämpfenden Frequenzbereich erfolgen, wobei die Größe der Dämpfung insbesondere durch die Zahl der Lamellen, der dadurch bedingten Reibungsfläche der bei Auslenkung des Stützelements aneinander reibenden Oberflächen der Lamellen, und der Beschaffenheit dieser Oberflächen beeinflusst werden kann. Die Steifigkeit des Stützelements kann insbesondere durch die Wahl des Materials, die Anzahl der Lamellen und deren Geometrie beeinflusst werden. Insofern ist auch eine Anpassung der konkreten Auslegung hinsichtlich Dämpfung und Steifigkeit an die Bedürfnisse des Anwenders möglich. Die thermomechanische Dauerhaltbarkeit des Stützelements ist durch die weiche Lamellenstruktur gewährleistet.

Im Vergleich zu herkömmlichen Aufhängungssystemen für Abgasanlagen ist das erfindungsgemäße System zur Befestigung der Abgasanlage preiswert, da keine alterungsanfälligen und gegebenenfalls abzuschirmenden Elastomerelemente oder zusätzlichen Dämpfungssysteme wie Schwingungstilger oder Entkoppelelemente erforderlich sind.

Zudem ist die Anordnung kompakt, so daß ein kleiner Montageraum genügt, die Abgasanlage an Motor bzw. Getriebe zu befestigen. Die Abgasanlagenhalterung kann bei einer erforderlichen Reparatur in einfacher Weise ausgewechselt werden. Eine Anbindung an bestehende Systeme ist leicht möglich. In vorteilhafter Weise wird das gasführende System nicht beeinträchtigt, was anderweitig, z.B. beim Einsatz von Entkoppelungselementen zu Problemen hinsichtlich Dichtheit, Wärmeisolation und Dauerhaltbarkeit führen kann.

Deswegen sind beim Einsatz von Entkoppelelementen zusätzliche Stützelemente erforderlich, um die mechanische Dauerhaltbarkeit gewährleisten zu können. Im Idealfall kann der erfindungsgemäße Lamellenhalter das Entkoppelungselement ersetzen und entsprechend Kosten sparen.

Auch in punkto Gewichtseinsparung ist das erfindungsgemäße Stützelement herkömmlichen Halterungen mit Schwingungstilger überlegen: wenn z.B. ein herkömmlicher Schwingungstilger etwa eine Masse von 1 kg aufweist, wiegt ein vergleichbares erfindungsgemäßes Stützelement, samt abgasanlagenseitiger Konsole nur ca. 250 g.

Die Erfindung wird nun anhand von Ausführungsbeispielen näher erläutert, wobei Bezug auf die beigefügten Zeichnungen genommen wird. Es zeigen
- Fig. 1: eine Übersichtsdarstellung der erfindungsgemäßen Halterung der Abgasanlage;
- Fig. 2: einen Längsschnitt (oben) und eine Draufsicht auf eine erste Ausführungsform des erfindungsgemäßen Stützelements;
- Fig. 3: eine zweite Ausführungsform des erfindungsgemäßen Stützelements zur Darstellung einer gewinkelten Raumform;
- Fig. 4: eine dritte Ausführungsform des erfindungsgemäßen Stützelements mit umbördelten Lamellen und
- Fig. 5: eine Draufsicht auf eine Ausführungsform des erfindungsgemäßen Stützelements zur schematischen Darstellung von Anbindungsstellen (oben), sowie einen Längsschnitt durch eine mögliche Ausführungsform des erfindungsgemäßen Stützelements (unten). Und
- Fig. 6: veranschaulicht eine beispielhafte Einbausituation von Stützelementen nach den Figuren 1 bis 5.

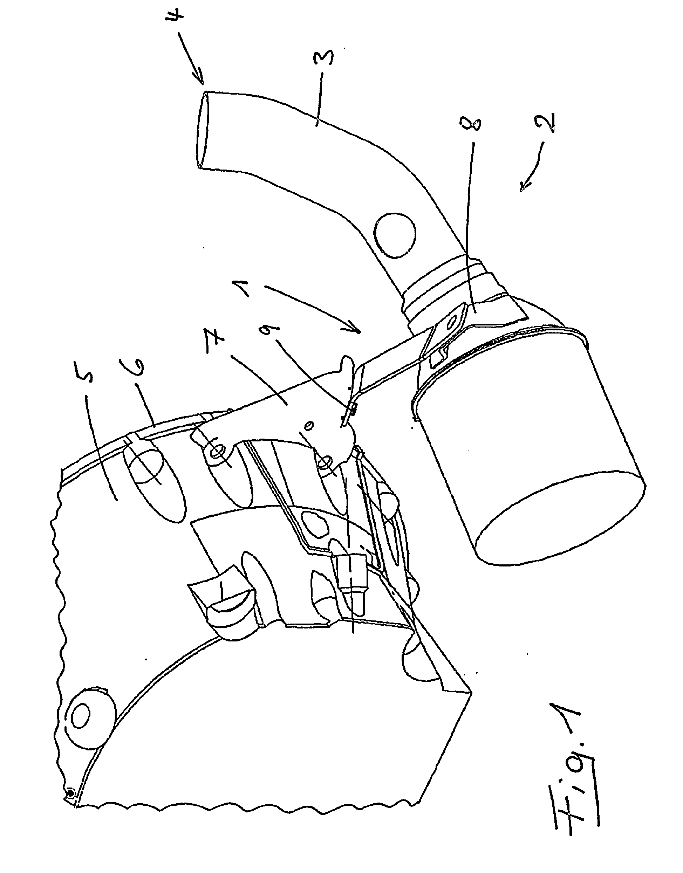

Zunächst sei Fig. 1 betrachtet, welche eine Übersichtsdarstellung der erfindungsgemäßen Halterung der Abgasanlage zeigt.

Die Abgasanlage 2 einer Brennkraftmaschine, welche über einen Krümmeranschluß 4 eines Vorrohres 3 aus einem nicht dargestellten Krümmer mit Verbrennungsgasen gespeist wird, ist über das erfindungsgemäße Stützelement 1 in Form eines Lamellenhalters an dem Getriebegehäuse 5 befestigt. Das Getriebegehäuse 5 ist über den Motorblockanschluß 6 mit dem Motorblock verbunden. Das Stützelement 1 ist abgasanlagenseitig mittels einer Konsole 8 an der Abgasanlage, nämlich an dem Eingangstrichter des Katalysators befestigt. Stützelement 1 und Konsole 8 sind durch Verschweißen verbunden. Getriebeseitig ist das erfindungsgemäße Stützelement 1 mittels einer Halterung 7 an dem Getriebegehäuse 5 befestigt. Eine Befestigung des Stützelements 1 an der Halterung 7 erfolgt durch eine Verschraubung 9. Das Stützelement 1 besteht aus drei bandartigen, elastischen, aufeinander liegenden Lamellen. Das Stützelement 1 weist, im Längsschnitt betrachtet, eine zweifach gewinkelte Struktur in Form einer Versatzstufe auf.

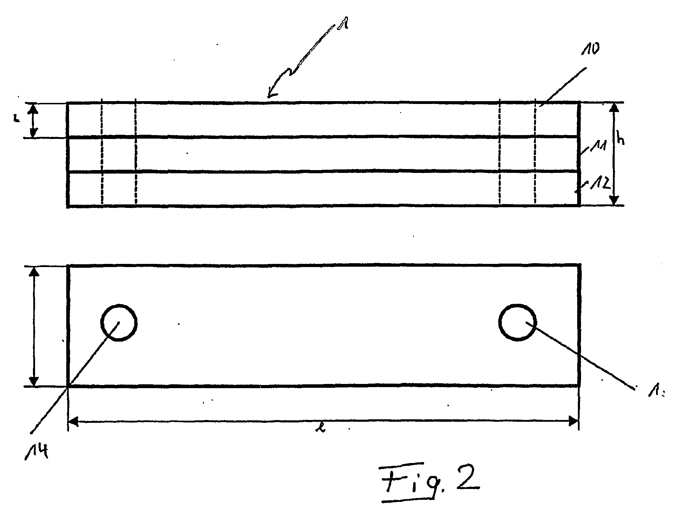

In Fig. 2 ist eine andere Ausführungsform des Stützelements 1 in Form eines Lamellenhalters im Detail dargestellt. Wie der oberen Abbildung, einem Längsschnitt, von Fig. 2 zu entnehmen ist, ist das Stützelement 1 aus drei einzelnen Lamellen 10, 11 und 12 zusammengesetzt. Eine Einzellamelle hat die Stärke d, wobei sich aus den Stärken der drei Einzellamellen die Höhe h des Stützelements 1 ergibt.

Fig. 2, untere Abbildung, zeigt eine Draufsicht auf das aus gestapelten Einzellamellen 10, 11, 12 zusammengesetzte Stützelement 1. Das Stützelement hat die Länge 1, sowie die Breite b. Die Bezugsziffer 13 zeigt eine nahe einem Längsende des Stützelements angeordnete Anbindungsstelle des Stützelements an das Motor- bzw. Getriebegehäuse, während die Bezugsziffer 14 eine nahe dem anderen Längsende des Stützelements angeordnete Anbindungsstelle des Stützelements an die Abgasanlage zeigt.

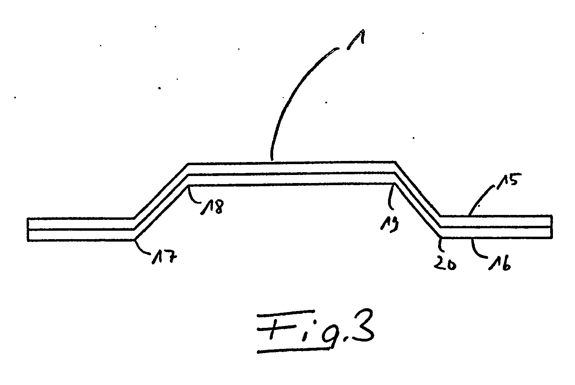

Fig. 3 zeigt eine weitere vorteilhafte Ausführungsform des erfindungsgemäßen Stützelements zur Darstellung einer gewinkelten Raumform des Stützelements 1. Bei dieser Ausführungsform weist das aus zwei Lamellen 15, 16 zusammengesetzte Stützelement 1, im Längsschnitt betrachtet, eine vierfach gewinkelte Struktur in Form zweier spiegelsymmetrisch angeordneter Versatzstufen auf. Die Struktur ist an den Winkeln 17, 18, 19 und 20 gewinkelt. Es erfolgt kein Versatz der Enden des Stützelements, d.h. beide Enden der Struktur liegen in der selben Ebene.

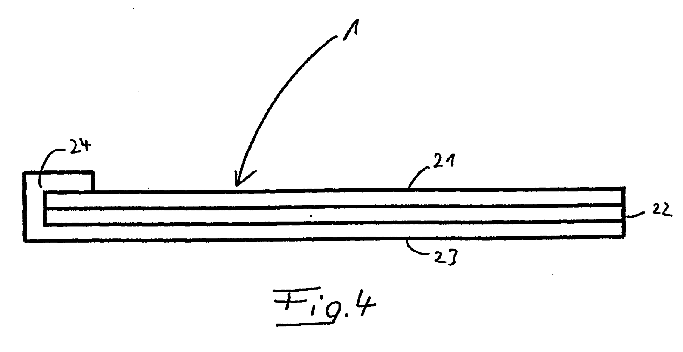

Fig. 4 zeigt eine weitere vorteilhafte Ausführungsform des erfindungsgemäßen Stützelements 1, bei welcher die einzelnen Lamellen 21, 22, 23 durch Umbördelung aneinander befestigt sind. Hierbei erfolgt eine stirn- und ggf. längsseitige Umbördelung der Lamellen 21, 22 durch die im Stapel des Stützelements 1 randständige Lamelle 23.

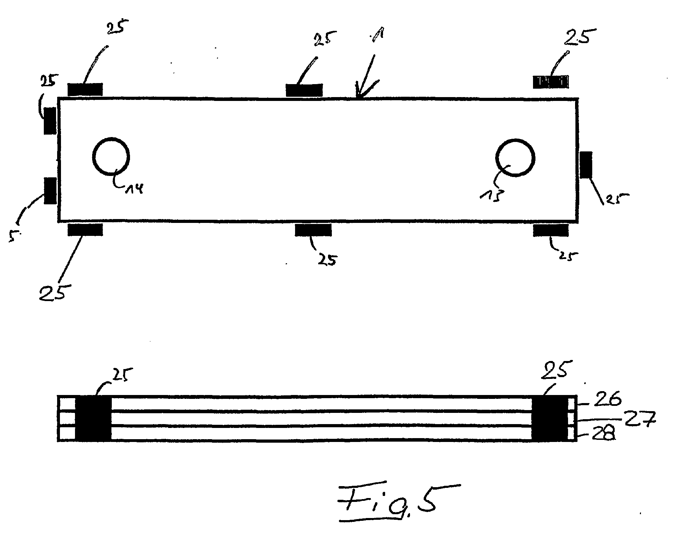

Fig. 5 zeigt (obere Abbildung) eine Draufsicht auf das erfindungsgemäße Stützelement zur schematischen, nur beispielhaften Veranschaulichung von Befestigungsstellen zur Befestigung der Lamellen aneinander. So ist es z. B. möglich, die Lamellen an jeweils drei Befestigungsstellen auf den beiden Längsseiten zu verbinden. Ebenso ist es möglich, die Lamellen an jeweils zwei Befestigungsstellen auf den beiden Längsseiten zu verbinden. Ebenso ist es möglich, die Lamellen an nur jeweils einer, vorteilhaft mittigen, Befestigungsstelle auf den beiden Längsseiten zu verbinden. Stirnseitig können die Lamellen z. B. mittig, rechts- oder linksständig durch eine einzelne Befestigungsstelle aneinander befestigt werden. Ebenso ist es möglich, daß die Lamellen stirnseitig durch jeweils zwei Befestigungsstellen aneinander befestigt werden.

Fig. 5, untere Abbildung, zeigt eine Ausführungsform des erfindungsgemäßen Stützelements im Längsschnitt, bei welcher die Lamellen auf der Längsseite durch zwei endständige Befestigungsstellen aneinander befestigt wurden. Beliebig formschlüssige, kraftschlüssige Verbindungen sind zulässig (z.B. Punkten, Schweißen, Nieten, Schrauben, Löten, Kleben, Magnet).

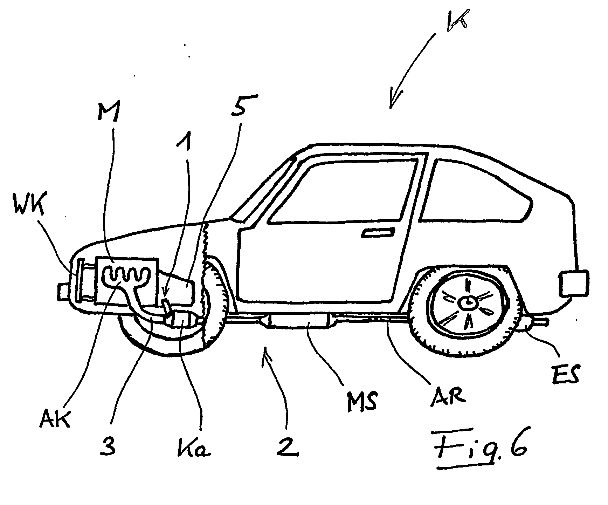

Fig. 6 zeigt die Einbausituation eines Stützelements 1 mit dem vorstehend erläuterten Aufbau in ein schematisch dargestelltes Kraftfahrzeug K. Dieses ist, abgesehen von der Ausführung der Halterung für die Abgasanlage 2, in als solches bekannter Weise aufgebaut und umfaßt einen frontseitig angeordneten Motor M mit einem zugeordneten Wasserkühler WK und ein Getriebe G. Die Abgasanlage 2 umfaßt beispielhaft einen Abgaskrümmer AK, ein Vorrohr 3, einen Katalysator Ka, einen Mittelschalldämpfer MS und einen Endschalldämpfer ES mit einem Endrohr, wobei der Katalysator Ka mit dem Mittelschalldämpfer MS und dieser mit dem Endschalldämpfer ES über Abgasrohre AR verbunden sind. Insoweit entspricht das Kraftfahrzeug K nach Fig. 6 dem hinlänglich bekannten Stand der Technik, so daß es einer weitergehenden Erläuterung nicht bedarf.

Der Halterung der Abgasanlage 2 dient u.a. ein Stützelement 1 des weiter oben erläuterten Aufbaus, mittels welchem der Katalysator Ka nachgiebig an dem Getriebegehäuse 5 befestigt ist.

## Patentansprüche

1. Kraftfahrzeug (K) mit einem Verbrennungsmotor (M), einem Getriebe (G), einer Abgasanlage (Z) und einer Abgasanlagenhalterung zur Befestigung der Abgasanlage (Z), wobei
die Abgasanlage (2) durch die Abgasanlagenhalterung (1, 7, 8) an dem Motor und/oder an dem Getriebe (5) befestigt ist, wobei die Abgasanlagenhalterung ein Stützelement (1) in Form eines Lamellenhalters mit wenigstens zwei bandartigen, elastischen, stapelförmig übereinander liegenden und auf wenigstens einem Teil ihrer Länge gegeneinander verschiebbaren Lamellen (10, 11, 12; 15, 16; 21, 22, 23; 26, 27, 28) umfaßt.

2. Kraftfahrzeug nach Anspruch 1,
**dadurch gekennzeichnet,**
**daß** das Stützelement (1) im Längsschnitt eine gewinkelte Struktur aufweist.

3. Kraftfahrzeug nach Anspruch 2,
**dadurch gekennzeichnet,**
**daß** das Stützelement (1) im Längsschnitt eine zweifach gewinkelte Struktur in Form einer Versatzstufe aufweist.

4. Kraftfahrzeug nach Anspruch 2,
**dadurch gekennzeichnet,**
**daß** das Stützelement (1) im Längsschnitt eine vierfach gewinkelte Struktur in Form zweier spiegelsymmetrisch zueinander angeordneter Versatzstufen aufweist.

5. Kraftfahrzeug nach Anspruch 1,
**dadurch gekennzeichnet,**
**daß** das Stützelement im Längsschnitt eine gewundene Struktur aufweist.

6. Kraftfahrzeug nach einem der vorhergehenden Ansprüche,
**dadurch gekennzeichnet,**
**daß** wenigstens eine Lamelle aus einem austenitischen Werkstoff besteht.

7. Kraftfahrzeug nach einem der vorhergehenden Ansprüche,
**dadurch gekennzeichnet,**
**daß** wenigstens eine Lamelle aus einem ferritischen Werkstoff besteht.

8. Kraftfahrzeug nach einem der vorhergehenden Ansprüche,
**dadurch gekennzeichnet,**
**daß** wenigstens eine Lamelle aus Federstahl besteht.

9. Kraftfahrzeug nach einem der vorhergehenden Ansprüche,
**dadurch gekennzeichnet,**
**daß** die Lamellen aus verschiedenen Werkstoffen bestehen.

10. Kraftfahrzeug nach einem der vorhergehenden Ansprüche,
**dadurch gekennzeichnet,**
**daß** die Lamellen verschiedene Stärken aufweisen.

11. Kraftfahrzeug nach einem der vorhergehenden Ansprüche,
**dadurch gekennzeichnet,**
**daß** die Lamellen eine glatte Oberfläche aufweisen.

12. Kraftfahrzeug nach einem der vorhergehenden Ansprüche 1 bis 10,
**dadurch gekennzeichnet,**
**daß** die Lamellen eine raue Oberfläche aufweisen.

13. Kraftfahrzeug nach einem der vorhergehenden Ansprüche,
**dadurch gekennzeichnet,**
**daß** die Lamellen eine strukturierte Oberfläche aufweisen.

14. Kraftfahrzeug nach einem der vorhergehenden Ansprüche,
**dadurch gekennzeichnet,**
**daß** die Lamellen des Stützelements durch Verschrauben, Verschweißen oder eine form- und/oder kraftschlüssige Verbindung aneinander befestigt sind.

15. Kraftfahrzeug nach Anspruch 14,
**dadurch gekennzeichnet,**
**daß** die Lamellen des Stützelements von einer im Lamellenstapel außen befindlichen Lamelle (23) an wenigstens einer Stirn- und/oder Längsseite umbördelt sind.

16. Kraftfahrzeug nach einem der vorhergehenden Ansprüche,
**dadurch gekennzeichnet,**
**daß** das Stützelement 3, 4 oder 5 Lamellen aufweist.

17. Kraftfahrzeug nach einem der vorhergehenden Ansprüche,
**dadurch gekennzeichnet,**
**daß** das Stützelement (1) mittels einer Konsole (8) an der Abgasanlage (2) befestigt ist.

18. Kraftfahrzeug nach einem der vorhergehenden Ansprüche,
**dadurch gekennzeichnet,**
**daß** das Stützelement (1) mittels einer Halterung (7) an dem Motor bzw. dem Getriebe befestigt ist.

## Claims

1. A motor vehicle (K) comprising a combustion engine (M), a gearbox (G), an exhaust system (2) and an exhaust system bracket for fastening the exhaust system (2), the exhaust system (2) being fastened to the motor and/or the gearbox (5) through the exhaust system bracket (1, 7, 8), the latter comprising a supporting element (1) in the form of a plate holder with at least two band-like, elastic plates (10, 11, 12; 15, 16; 21, 22, 23; 26, 27, 28) which are superimposed so as to form a stack and are able to move relative to each other on at least a part of their length.

2. The motor vehicle according to claim 1, **characterized in that** the supporting element (1) has an angular structure as seen in the longitudinal section.

3. The motor vehicle according to claim 2, **characterized in that** the supporting element (1), as seen in the longitudinal section, has a twofold angular structure in the form of an offset step.

4. The motor vehicle according to claim 2, **characterized in that** the supporting element (1), as seen in the longitudinal section, has a fourfold angular structure in the form of two offset steps which are arranged mirror-inverted to each other.

5. The motor vehicle according to claim 1, **characterized in that** the supporting element has a helical structure as seen in the longitudinal section.

6. The motor vehicle according to any of the preceding claims, **characterized in that** at least one of the plates is made of an austenitic material.

7. The motor vehicle according to any of the preceding claims, **characterized in that** at least one of the plates is made of a ferritic material.

8. The motor vehicle according to any of the preceding claims, **characterized in that** at least one of the plates is made of spring steel.

9. The motor vehicle according to any of the preceding claims, **characterized in that** the plates are made of different materials.

10. The motor vehicle according to any of the preceding claims, **characterized in that** the plates have differing thicknesses.

11. The motor vehicle according to any of the preceding claims, **characterized in that** the plates have a smooth surface.

12. The motor vehicle according to any of the preceding claims 1 to 10, **characterized in that** the plates have a rough surface.

13. The motor vehicle according to any of the preceding claims, **characterized in that** the plates have a structured surface.

14. The motor vehicle according to any of the preceding claims, **characterized in that** the plates of the supporting element are fastened to each other by screwing, welding or a form-fitting and/or force-fitting connection.

15. The motor vehicle according to claim 14, **characterized in that** one exterior plate (23) in the plate stack is flanged so as to clamp the plates of the supporting element on a front end and/or longitudinal side.

16. The motor vehicle according to any of the preceding claims, **characterized in that** the supporting element has three, four or five plates.

17. The motor vehicle according to any of the preceding claims, **characterized in that** the supporting element (1) is fastened to the exhaust system (2) by means of a console (8).

18. The motor vehicle according to any of the preceding claims, **characterized in that** the supporting element (1) is fastened to the motor and the gearbox, respectively, by means of a bracket (7).

## Revendications

1. Véhicule automobile (K) comportant un moteur à combustion (M), une boîte de vitesses (G), un système de gaz d'échappement (2) et un support de système de gaz d'échappement pour fixer le système de gaz d'échappement (2), le système de gaz d'échappement (2) étant fixé par la monture de système de gaz d'échappement (1, 7, 8) au moteur et/ou à la boîte de vitesses, la monture de système de gaz d'échappement comprenant un élément de support (1) en forme d'un porte-lamelles avec au moins deux lamelles (10, 11, 12 ; 15, 16 ; 21, 22, 23 ; 26, 27, 28) en forme de bandes, élastiques et empilées les unes sur les autres et déplaçables les unes par rapport aux autres sur au moins une partie de leur longueur.

2. Véhicule automobile selon la revendication 1, **caractérisé en ce que** l'élément de support (1) présente en coupe longitudinale une structure coudée.

3. Véhicule automobile selon la revendication 2, **caractérisé en ce que** l'élément de support (1) présente en coupe longitudinale une structure coudée deux fois en forme d'un gradin décentré.

4. Véhicule automobile selon la revendication 2, **caractérisé en ce que** l'élément (1) présente en coupe longitudinale une structure coudée quatre fois en forme de deux gradins décentrés agencés de manière symétrique l'un par rapport à l'autre.

5. Véhicule automobile selon la revendication 1, **caractérisé en ce que** l'élément de support présente en coupe longitudinale une structure en spirale.

6. Véhicule automobile selon l'une des revendications précédentes, **caractérisé en ce qu'**au moins une lamelle est en un matériau austénitique.

7. Véhicule automobile selon l'une des revendications précédentes, **caractérisé en ce qu'**au moins une lamelle est en un matériau ferritique.

8. Véhicule automobile selon l'une des revendications précédentes, **caractérisé en ce qu'**au moins une lamelle est en acier à ressorts.

9. Véhicule automobile selon l'une des revendications précédentes, **caractérisé en ce que** les lamelles sont en différents matériaux.

10. Véhicule automobile selon l'une des revendications précédentes, **caractérisé en ce que** les lamelles présentent différentes épaisseurs.

11. Véhicule automobile selon l'une des revendications précédentes, **caractérisé en ce que** les lamelles présentent une surface lisse.

12. Véhicule automobile selon l'une des revendications précédentes 1 à 10, **caractérisé en ce que** les lamelles présentent une surface rugueuse.

13. Véhicule automobile selon l'une des revendications précédentes, **caractérisé en ce que** les lamelles présentent une surface structurée.

14. Véhicule automobile selon l'une des revendications précédentes, **caractérisé en ce que** les lamelles de l'élément de support sont fixées les unes aux autres par vissage, soudage ou par une liaison à coopération de formes et/ou de forces.

15. Véhicule automobile selon la revendication 14, **caractérisé en ce que** les lamelles de l'élément support sont rabattues sur au moins une face frontale et/ou sur une face longitudinale par une lamelle (23) se trouvant à l'extérieur dans une pile de lamelles.

16. Véhicule automobile selon l'une des revendications précédentes, **caractérisé en ce que** l'élément de support présente 3, 4 ou 5 lamelles.

17. Véhicule automobile selon l'une des revendications précédentes, **caractérisé en ce que** l'élément de support (1) est fixé au système de gaz d'échappement (2) au moyen d'une console (8).

18. Véhicule automobile selon l'une des revendications précédentes, **caractérisé en ce que** l'élément de support (1) est fixé au moteur et/ou à la boîte de vitesses au moyen d'une monture (7).
